# EUROPEAN PATENT SPECIFICATION

(11) **EP 1 244 015 B1**
(45) Date of publication and mention of the grant of the patent: **19.08.2015**
(21) Application number: 02003294.2
(22) Date of filing: 22.02.2002
(51) Int. Cl.: G06F 11/20, G06F 11/14

(54) **Parallel replication mechanism for state information produced by serialized processing**
Paralleler Replikationsmechanismus für durch serielle Verarbeitung erzeugten Zustandsinformationen
Méchanisme de réplication parallèlle d'information d'état produite par traitement sériel

(30) Priority: 21.03.2001 EP 01107004
(43) Date of publication of application: 25.09.2002
(73) Proprietor: SAP SE, 69190 Walldorf (DE); International Business Machines Corporation, Armonk, NY 10504 (US)
(72) Inventor: Schäfer, Christian, 69181 Leimen (DE); Schmidt, Lutz, 69226 Nussloch (DE); Reichert, Wolfgang, 71088 Holzgerlingen (DE)
(74) Representative: Müller-Boré & Partner Patentanwälte PartG mbB

(56) References cited:
- KEXIANG HU, SHARAD MEHROTRA, SIMON KAPLAN: "An optimized two-safe approach to maintaining remote backup systems (1997)"[Online] 1997, XP002508482 Retrieved from the Internet: URL:http://citeseerx.ist.psu.edu/viewdoc/s ummary?doi=10.1.1.36.5197> [retrieved on 2008-12-17]
- POLYZOIS C A ET AL: "EVALUATION OF REMOTE BACKUP ALGORITHMS FOR TRANSACTION PROCESSING SYSTEMS" PROCEEDINGS OF THE ACM SIGMOD INTERNATIONAL CONFERENCE ON MANAGEMENT OF DATA. SAN DIEGO, JUNE 2 - 5, 1992; [PROCEEDINGS OF THE ACM SIGMOD INTERNATIONAL CONFERENCE ON MANAGEMENT OF DATA], NEW YORK, ACM, US, vol. 21, 2 June 1992 (1992-06-02), pages 246-255, XP000393593 ISBN: 978-0-89791-521-2
- MOHAN C ET AL: "Algorithms for the management of remote backup data bases for disaster recovery" PROCEEDINGS OF THE INTERNATIONAL CONFERENCE ON DATA ENGINEERING. VIENNA, APR. 19 - 23, 1993; [PROCEEDINGS OF THE INTERNATIONAL CONFERENCE ON DATA ENGINEERING], LOS ALAMITOS, IEEE COMP. SOC. PRESS, US, vol. CONF. 9, 19 April 1993 (1993-04-19), pages 511-518, XP010095494 ISBN: 978-0-8186-3570-0
- DOWNING A R ET AL: "OSCAR: an architecture for weak-consistency replication" DATABASES, PARALLEL ARCHITECTURES AND THEIR APPLICATIONS,. PARBASE-90, INTERNATIONAL CONFERENCE ON MIAMI BEACH, FL, USA 7-9 MARCH 1990, LOS ALAMITOS, CA, USA,IEEE COMPUT. SOC, US, 7 March 1990 (1990-03-07), pages 350-358, XP010018754 ISBN: 978-0-8186-2035-5
- PETERSEN K ET AL: "FLEXIBLE UPDATE PROPAGATION FOR WEAKLY CONSISTENT REPLICATION" OPERATING SYSTEMS REVIEW, ACM, NEW YORK, NY, US, vol. 31, no. 5, 1 December 1997 (1997-12-01), pages 288-301, XP000771039 ISSN: 0163-5980

## Description

### Background of the Invention

### 1. Field of the Invention

The present invention generally relates to creating and maintaining a duplicate copy of data which might be needed at a later point of time. Particularly, the present invention relates to a method and system for replicating state information stored in a first data processing system to a second data processing system, whereby said state information is kept in a set of records.

### 2. Description of the Related Art

The expression "replication" basically refers to creating and maintaining a duplicate copy of a source data collection stored, e.g., in a database, a list, a table or in file system, on a destination data processing system. The term usually implies the way of how to copy the entire source data collection or parts of it which have changed since the last replication with the destination data processing system.

Different kinds of replication mechanisms are distinguished. Replication may be one-way or two-way. One-way replication refers to a scenario in which an object being subject to the replication process can only be modified in one place. A duplicate is mainly held as a read-only reference copy or as backup copy, i.e., a spare copy for use in the event of failure or loss of the original. In contrary, two-way replication means that the copy of the replicated object might also be modified and the changes have to be applied to the original one.

Therefore, two-way replication is more complicated because of the possibility that a replicated object may have been updated differently in two locations in which case some method is needed to reconcile the different versions.

Furthermore, replication may be synchronous or asynchronous. In synchronous replication systems, no changes by a transaction is considered permanent until all changes made by the transaction are successfully applied at the source site and at all of the relevant destination sites. Asynchronous replication systems separate the task of making the changes at the source site from the task of making changes at the destination sites. Changes made by a transaction are made permanent at a source site without respect to whether the changes have been made permanent at any of the relevant destination sites.

From US 5,937,414 a method is known for maintaining multiple copies of a body of data at multiple sites. According to the taught method, initially, a change to a first copy of the body of data at a first site is detected. Then, in response to detecting the change to the first copy, the following steps are performed. The change are asynchronously propagated to a second copy of the body of data at a second site and, finally, the changes are synchronously propagated to third copy of the body of data at a third site.

In case it has to be ensured that the replicated data can be used as a backup copy of the original data, only synchronous replication comes into question. Only this kind of replication compared to asynchronous replication guarantees that no changes applied to the original data get lost. In order to provide consistency in prior art replication systems the changes applied to the original data are sequentially sent to the backup copy of said data on a backup system. Only at a point of time when a particular change has been successfully applied to the backup copy, the respective change to the original data is considered permanent. Hence, the time spread between a change request and an acknowledgment that the requested change has been applied includes the period of time for performing the change on the data, transmitting it to the backup system, waiting for the acknowledgment from the backup system and some additional computation time. Depending on the speed of the data connection to the backup system and its computation performance, the time spread needed for serving a change request might significantly increase.

Document Kexiang Hu et al "An optimized two-safe approach to maintain remote backup systems", online 1997 relates to an optimized two-safe approach to maintaining remote backup systems that combines desirable features of both 1-safe and 2-safe approaches, i.e. high throughput without risking the loss of transactions. Developed algorithms are applicable to multi processor primary and backup system environments.

Document Mohan C et al "Algorithms for the management of remote backup data bases for disaster recovery", Proc. of Int. Conf. on Data Engineering, April, 19-23, 1993 relates to distributed transactions, shared disks transaction environment and combining execution of 1-safe and 2-safe transactions in a single system.

### Object of the Invention

Starting from this, the object of the present invention is to provide a method for replicating state information having an increased throughput, i.e., the average number of requests that can be processed within a time interval.

### Brief Summary of the Invention

The foregoing object is achieved by a method as laid out in the independent claims. Further advantageous embodiments of the present invention are described in the sub claims and are taught in the following description.

According to the present invention a method is provided for replicating state information stored in a first data processing unit to a second data processing unit. State information generally describes how something is, e.g., its configuration, attributes, condition, locks or information content. Such information might relate to, e.g., a database, a process control system, system automation or monitoring. A state of such a system is usually temporary, i.e., it changes with time, and volatile, i.e., it will be lost or reset to some initial state if the system is switched off. In order to provide a copy of such state information as a backup a replication mechanism is used.

The replication takes place between at least two data processing units. The first one initiates the replication process and the second one keeps a backup copy of the original state information. Thus, the present invention implements a one-way replication process as described above. The data processing units might be formed by any machine or process that is able to manipulate data, preferably, they are formed by a computer system or an executing program running on a computer system.

The state information is kept in a set of records, whereby a record is an ordered set of fields, which might be stored in any kind of memory provided by the first data processing system. The records represent different entities with different values for the attributes represented by the fields. However, not all of the information to be stored need to be written in a record. A record might rather keep a reference, such as a pointer, to a separate location at which additional information is stored.

The state information is created, modified or deleted as a result of the processing of an incoming request message or in general any data, requests, or events that trigger the processing. The processing in general may generate any data which are sent back as response to the sender of the request or which trigger an action as result of the incoming data. For each incoming request message received by the first data processing system an indicator is assigned to said incoming request message representing the order or sequence in which the particular incoming request messages will be processed. The processing sequence might be governed by a priority assigned to the incoming request message or its content. Furthermore, the incoming request message is processed and the set of records is updated in accordance with the result of the processing of said incoming request message. Then a modification record is sent to a first storage subsystem preferably provided by the second data processing unit, whereby the modification record contains the indicator assigned to said incoming request message and all changes applied to said set of records performed during processing of said incoming request message. This enables the second data processing unit to redo all changes performed on the original state information using a copy of the state information kept in the second data processing unit.

In order to allow a short response time and parallelism between the reception of one particular incoming request message and sending a respective response message, according to the present invention, the actual replication process is split into a first phase and a second phase. Thus, it is not waited until the modification records have completely been processed by the second data processing system, i.e., all changes have been applied to the copy of the state information. Instead, in the first replication phase changes applied to the records are solely transmitted to the first storage subsystem, in the following, also referred to as "work area". It is only waited until the data have been stored successfully in the first storage subsystem. To provide a meaningful backup concept the first storage subsystem shall be independent of the first data processing system ensuring that the data are safe and accessible by the second data processing system even if the first data processing system is broken. The first storage subsystem may reside on or should be part of the second data processing system.

In this moment it is for sure that the second data processing system is able to build an exact copy of the original state information. Thus, acknowledge messages are checked which have been received from said first storage subsystem indicating a receipt of said sent modification records and a response message as a reaction to an incoming request message is sent to the respective sender for such incoming request messages the modification record of which and the modification records of all its predecessors have been received by the first storage subsystem. Hence, although the changes to the state information is not immediately applied to the backup copy, the method and system according to the present invention nevertheless behaves like a synchronous replication system. Due to this two-phase concept it can be ensured that incomplete or inconsistent modification records are detected before changes are made to the backup copy. In other words, the replication mechanism according to the present invention ensures that a consistent copy of the state information can be produced.
Later, in the second replication phase, independently from the data processing performed on the first data processing unit the notified changes are actually applied to the replica of the state information, as explained below in greater detail.

In order to further improve the overall performance and to utilize parallelism, according to an advantageous embodiment of the present invention, receiving an incoming request message, assigning an indicator, processing said incoming request message and sending a modification record are performed concurrently to checking acknowledge messages and sending a response message.

The taught concept allows to transmit several changes applied to the original state information at the same time. The transmission bandwidth can advantageously be increased by providing more than one communication channel established between the first data processing unit and the first storage subsystem ("work area"). Consequently, the first storage subsystem is able to receive all modification records at the same time which are concurrently sent by said first data processing unit. This might be solved by splitting the first storage subsystem into several storage units each of which is connected to one communication channel reaching the second data processing unit. Due to this two-phase concept it is acceptable if modification records are transmitted out of sequence to the first storage subsystem.

After the modification records have safely been stored into the first storage subsystem, an acknowledge message is returned to the first data processing unit indicating a receipt of the particular modification record. Then, independently from the operation of the first data processing unit, the changes are applied to the copy of the state information by the second data processing system. The actual copy of the state information, however, is stored in a second storage subsystem provided in the second data processing unit. In order to allow an exact duplication of the original state information each record stored in said second storage subsystem includes a field for storing the indicator representing the order in which the incoming request messages have been processed. The indicator has already been transmitted to the first storage subsystem as part of the modification record.

The operation of applying the changes stored in the modification records to the copy of the state information stored in the second storage subsystem could be done sequentially in the order in which the changes were originally requested. More advantageously, according to the present invention, more than one change is applied to the copy of the state information at the same time. This increases the performance of the backup system. In order to facilitate that recent changes to one and the same record of the state information are not wrongly overwritten by an older modification, applying changes includes storing said indicator assigned to the processed request message in the respective field of the changed records. In order to ensure that changes are correctly applied, the function of applying changes includes checking the stored indicator. Furthermore, only such modifications are applied which are more recent than the last change applied to a particular record.

The described method ensures that the whole system preserves the sequential order. Processing of an incoming request keeps pending, i.e. a response is not given until the following conditions are satisfied:
1. The modification record related to this request is successfully stored in the first storage subsystem and the respective acknowledgment has been received.
2. Non of the preceding requests are in a pending state.

Condition 2 can be simplified by checking that the modification record of the last one before this request has been acknowledged. When this rule is applied recursively it covers the above condition.
On the second data processing unit similar checking is done. Before a modification record is considered to be applied to the backup copy the following conditions must be true:
1. The modification record is completely and correctly stored in the first storage subsystem.
2. None of the preceding modification records is missing or incomplete and therefore requires retransmission.

Condition 2 can be simplified here as well by checking that the modification record one before is completely and correctly stored.

It is acknowledged that by using the concepts of the present invention more than one replication copy of the state information may be created. In this case it is checked whether an acknowledge message from all sites providing a replica have been received indicating that a particular modification record has successfully been stored.
The present invention can be realized in hardware, software, or a combination of hardware and software. Any kind of computer system - or other apparatus adapted for carrying out the methods described herein - is suited. A typical combination of hardware and software could be a general purpose computer system with a computer program that, when being loaded and executed, controls the computer system such that it carries out the methods described herein. The present invention can also be embedded in a computer program product, which comprises all the features enabling the implementation of the methods described herein, and which - when loaded in a computer system - is able to carry out these methods.

Computer program means or computer program in the present context mean any expression, in any language, code or notation, of a set of instructions intended to cause a system having an information processing capability to perform a particular function either directly or after either or both of the following a) conversion to another language, code or notation; b) reproduction in a different material form.

### Brief Description of the Several Views of the Drawings

The above, as well as additional objectives, features and advantages of the present invention, will be apparent in the following detailed written description.

The novel features of the invention are set forth in the appended claims. The invention itself, however, as well as a preferred mode of use, further objectives, and advantages thereof, will best be understood by reference to the following detailed description of an illustrative embodiment when read in conjunction with the accompanying drawings, wherein:
Fig. 1 shows a timing diagram of a known synchronous replication system;
Fig. 2 shows a functional diagram of a first phase of the data processing in the replication system according to the present invention;
Fig. 3 shows a functional diagram of a second phase of the data processing in the replication system according to the present invention; and
Fig. 4 shows a high level block diagram of a replication system according to the present invention.

### Detailed Description of the Invention

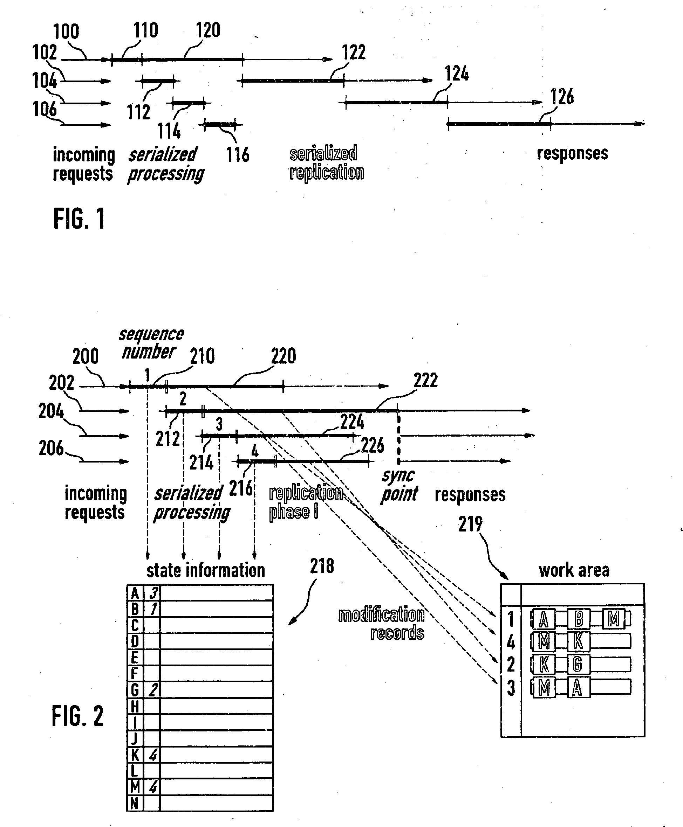

In Fig. 1 a timing diagram of a known synchronous replication system is depicted. The lapse of time is illustrated as running from left to right. The graphical elements that are drawn in a imaginary line one upon the other represent operations taking place at the same instant of time. Thus, in the shown scenario a first incoming request 100, a second incoming request 102, a third incoming request 104 and a fourth incoming request 106 are arriving at an input port of a first data processing system (not shown) at the same simultaneously.

Only one incoming request can be served concurrently, since its processing might involve changes to stored state information and the write access to such information is limited to one process. Therefore, the incoming requests 100 to 106 are processed one after the other. Bar 110 illustrates the time gap that is needed to process the first incoming request 100. Bars 112, 114 and 116 represent the lapse of time required to serve the second, third and fourth incoming request 102 to 106, respectively.

Directly after the processing of the first incoming request 100 is concluded the processing of the second incoming request 102 is commenced. Furthermore, a replication process is initiated, i.e., it is started to transmit the changes, which were applied to the original state information as a result of the first incoming request 100, to a second data processing unit. On the second data processing unit the transmitted changes will be applied to a copy of the original state information in the same way as it is performed in the first data processing unit. Hence, the order in which the changes get applied to the original state information they have to be applied to the duplicate. In order to provide the behavior of a synchronous replication system, a response message to the sender of the incoming request is only sent after the changes have successfully been transmitted to the second data processing unit, they have been applied to the replica and an acknowledge message has been received. The time gap for these actions is depicted as bar 120 which follows bar 110. At the rightmost end of bar 120 the moment in time is reached when the response message is sent to the sender of the first incoming request 100 indicating that the request has been served.

Only after the replication of the changes that have been applied to the state information as a result of the processing of the first incoming request is concluded, the changes initiated by the second incoming request 102 can be replicated as illustrated by bar 122. Correspondingly, the replication of changes because of the third and fourth incoming message 104 and 106 are done as indicated by the bars 124 and 126. Mostly because of data transmission over a network to the second data processing unit which might be comparably slower than processing of the data within the first data processing unit, the period of time needed to apply changes to the original state information is much shorter than the time spread needed for the replication as illustrated by the longer bars 120 to 126 in comparison to bars 110 to 116. Hence, the data processing might significantly be delayed.

Now with reference to Fig. 2, there is depicted a functional diagram of a first phase of the data processing in the replication system according to the present invention. As in the diagram of Fig. 1, a first incoming request 200, a second incoming request 202, a third incoming request 204 and a fourth incoming request 206 are concurrently arriving at an input port of a first data processing system.

Also for the data processing according to the present invention is holds true that only one incoming request can be served at the same time. Therefore, the incoming requests 200 to 206 are processed one after the other as illustrated by the staggered bars 210 to 216. Bar 210 represents the time gap that is required to serve the first incoming request 200. Bars 212, 214 and 216 represent the lapse of time needed to serve the second, third and fourth incoming request 202 to 206, respectively. Immediately after the processing of the first incoming request 200 is concluded the processing of the second incoming request 202 is started as illustrated by bar 212.

The updating of the state information stored in a table 218 is indicated by arrows running from bars 210 to 216 downwards to the table 218. The table 218 includes three columns. The first one is provided to store a unique key for each record of the state information. The second column keeps an indicator representing to which incoming request the most recently applied change is related and the third column contains the actual state information. It is acknowledged that the table storing the state information might comprise more fields depending on the information that has to be stored.

Concurrently to the processing of the second incoming request a first phase replication process is launched, i.e., changes, which were applied to the original state information as a result of the first incoming request 200, are forwarded to a second data processing unit. Such changes are transmitted to a dedicated storage subsystem of the second data processing system called "work area" 219. The data transmission of the first phase replication is indicated by arrows running from the bars 220 to 226 towards different rows of the work area 219. The work area 219 comprises at least as many storage spaces for taking a particular modification record as the number of modification records that can concurrently be transmitted. Furthermore, the work area is adapted to be able to receive all concurrently transmitted modification records at the same time.

In the work area 219 the indicator showing to which incoming request the transmitted modifications are related is stored next to the actual changes. The letters in one line represent the changes to particular records of the state information. Thus, the first incoming request causes changes to records "A", "B" and "M", the second incoming request causes changes to records "K" and "G", the third one to records "M" and "A" and the fourth one to records "M" and "K".

In contrary to the procedure as shown in the prior art of Fig. 1, according to the method and system of the present invention the second data processing system is only notified of the changes applied to the original copy of the state information. The change of the replica takes place at a later point in time, independently from the data processing of the first data processing unit in a second replication phase.

In order to provide the behavior of a synchronous replication system, a response message to the sender of the incoming request is sent after the changes to the original state information have successfully been transmitted to and stored in the work area. According to a preferred embodiment of the present invention the work area is situated on and controlled by the second data processing system.

The time gap for these actions is depicted as bar 220 which follows bar 210. At the rightmost end of bar 220 the moment in time is reached when the response message is sent to the sender of the first incoming request 200 indicating that the request has been served.

However, before dispatching a response message to the sender of the respective incoming request notifying the sender that the request processing completed, it is checked whether or not the modifications of all previously requested changes have been successfully transmitted to the work area and the respective acknowledgment has been received. In other words, only if the first phase replications of all predecessors of a particular incoming request are ended and the first phase replication of the particular incoming request is concluded as well, the response message of the particular incoming request and the response messages of all predecessors are sent. Such a scenario is now exemplary described with reference to the incoming requests 202 to 204 of Fig. 2.

The first phase replication of the second incoming request 202 is illustrated as bar 222. Correspondingly, the first phase replication of changes because of the third and fourth incoming requests 204 and 206 are illustrated by the bars 224 and 226. As it can be seen in Fig. 2 the first phase replication 222 of the second incoming request 202 only completes after the first phase replications 224 and 226 of the third and fourth incoming requests 214 and 216 do. This might be because of the amount of data to be transmitted or some issues related to the transmission facility. However, in order to ensure a synchronous behavior of the overall replication system, the respective senders are not notified of the completion of the first phase replication 224 and 226 related to the third and fourth incoming requests 204 and 206 until the first phase replication 222 related to the second incoming request is concluded. This point of time is called "synchronization point" and is indicated by a dotted line running from the rightmost end of bar 222 downwards.

It is apparent from the example explained above that because processing the first phase replication in parallel, a significant improvement of the overall performance can be achieved.

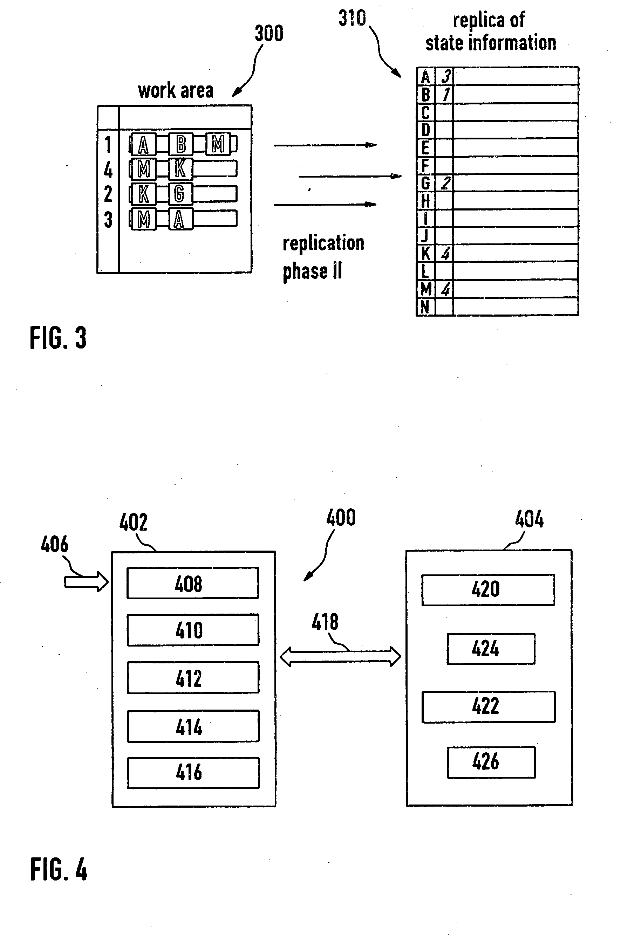

Now with reference to Fig. 3, there is depicted a functional diagram of a second phase of the data processing in the replication system according to the present invention. A work area 300 is formed by a dedicated storage subsystem of the second data processing system. After the data transmission of the first phase replication as shown in Fig. 2, all transmitted modification records are stored in the work area 300.

As known from Fig. 2 the work area 300 of Fig. 3 also stores the indicator showing to which incoming request the transmitted modifications are related. The following letters represent the changes to particular records of the state information. Thus, the first incoming request causes changes to records "A", "B" and "M", the second incoming request causes changes to records "K" and "G", the third one to records "M" and "A" and the fourth one to records "M" and "K".

In a second replication phase the changes stored in the modification records of the work area 300 are applied to a replica of the state information 310 as illustrated by arrows pointing from the work area 300 towards the replica 310. Identical to the original table keeping the state information, as described above, the replica of the state information is also formed by a table comprising three columns. The first one stores a unique key for each record of the state information. The second column keeps an indicator representing to which incoming request the most recently applied change is related and the third column contains the actual state information.

The second replication phase is independent of the request processing performed on the first data processing unit. It is purely done on the second data processing unit which serves as a backup system. The modification records are picked from the work area 300 and the modifications are applied to the replica of the state information 310. It should be noticed that the method and system according to the present invention allows parallel and out-of-sequence processing while applying the modifications to the replica 310.

First, a modification record is picked from the work area 300. Then, the indicators are checked to identify whether or not all modification records related to preceding changes to the original state information have successfully been stored in the work area 300. If no, then a different modification record is chosen. This ensures that a consistent state can be achieved. If yes, then, for each element listed in the picked modification record, the current indicator stored in the second column of the replica of the state information 310 is checked. If the indicator shows that the last modification of the particular record of the replica was because of a change previously applied to the original state information, then the record is replaced with the element taken from the modification record. In case the indicator refers to a more recent change to the original state information than it is remained unchanged, since is has been updated by a more recent modification record.

In case the modified record is applied to the replica, the entire record is overwritten and not only the modified portion. This ensures a correct replica also if modified records are applied to the replica in an order that is different to the order of the changes to the original state information.

Finally, with reference to Fig. 4, there is depicted a high level block diagram of a replication system 400 for perforning the method of the present invention. The system 400 replicates state information stored in a first data processing unit 402 to a second data processing unit 404, whereby said state information is kept in a set of records. The first data processing unit 402 includes an input port 406 for receiving an incoming request message for changing said state information, an initializing unit 408 for assigning an indicator to said incoming request message representing the order in which the incoming request messages will be processed, a first processing unit 410 for processing said incoming request message and updating said set of records in accordance with the result of the processing of said incoming request message, a communication unit 412 for sending a modification record to said second data processing unit containing said indicator assigned to said incoming request message and all changes applied to said set of records performed during processing of said incoming request message, a control unit 414 for checking acknowledge messages which have been received from said second data processing unit indicating a receipt of said sent modification records and a respond unit 416 for sending a response message as a reaction to an incoming request message to the respective sender for such incoming request messages the modification record of which and the modification records of all its predecessors have been received by the second data processing unit.

The first data processing unit 402 and the second data processing unit 404 are connected to each other with a bi-directional communication channel 418 to allow concurrent transmission of modification records to said second data processing unit 404. The second data processing unit 404 comprises a first storage subsystem 420 for storing received modification records sent by said first data processing unit 402. The first storage subsystem 420 is identical to the work area as described above. The first storage subsystem 420 is configured to be able to receive and store all modification records at the same time which are concurrently sent by said first data processing unit 402 over the communication channels 418.

The second processing system 404 further comprises a second storage subsystem 422 for storing the replicated set of records and a second processing unit 424 for applying the changes indicated by the modification records stored in the first storage subsystem 420 to the set of records stored in said second storage subsystem 422. Each record stored in said second storage subsystem 422 includes a field for storing said indicator and the second processing unit 424 is configured to store said indicator assigned to the processed request message in the respective field of all changed records when applying changes. The second processing unit 424 is further configured to check said indicator and to only apply modifications which are more recent than the last change applied to a particular record.

The second data processing system 404 further comprising an acknowledge unit 426 for returning an acknowledge message to the first data processing unit 402 over the communication channels 418 indicating a receipt of a particular modification record after it has been stored in said first storage subsystem 420. Each record includes a field for storing said indicator and said first processing unit 410 is configured to store said indicator assigned to the processed request message in the respective field of all changed records stored in the first data processing unit. The initializing unit 408 is further configured to determine the next incoming request to serve, in case more than one incoming request is waiting to be processed.

## Claims

1. A method for replicating state information stored in a first data processing unit (402) to a second data processing unit (404),
- wherein the state information describes how something is and the state information relates e.g. to a database, a process control system, system automation or monitoring;
- wherein the first processing unit initiates the replication and the second one keeps a backup copy of the original state information and wherein the data processing units are formed by a computer system or an executing program running on a computer system, whereby said state information is kept in a set of records, said method comprising the following steps, for each incoming request message requesting a change of said state information:
- receiving an incoming request message for changing said state information at an input port of a first processing system, wherein only one incoming request can be served at the same time;
- assigning an indicator to said incoming request message representing the order in which the incoming request messages are processed;
- processing said incoming request message and updating said set of records in accordance with the result of the processing of said incoming request message, wherein the set of records is stored in a table including three columns, and wherein:
- the first column is provided to store a unique key for each record of the state information;
- the second column keeps an indicator representing to which incoming request the most recently applied change is related; and
- the third column contains the actual state information;
- concurrently to the processing of the second incoming request launching a first phase replication process, the first phase replication process comprising the consecutive steps of:
- sending a modification record containing said indicator assigned to said incoming request message and all changes applied to said set of records performed during processing of said incoming request message to a work area, the work area being a dedicated storage subsystem of the second data processing unit, wherein the work area comprises at least as many storage spaces for taking a particular modification record as the number of modification records that can concurrently be transmitted, and the work area is adapted to be able to receive all concurrently transmitted modification records at the same time;
- storing in the work area the indicator showing to which incoming request the transmitted modifications are related next to the actual changes;
- checking acknowledge messages which have been received from said second data processing unit (404) indicating a receipt of said sent modification records;
- sending a response message to the sender of the incoming request after the changes to the original state information have successfully been transmitted to and stored in the work area,
wherein before the response message is dispatched to the sender of the respective incoming request it is checked whether or not the modifications of all previously requested changes have been successfully transmitted to the work area and the respective acknowledgments have been received, such that only if the first phase replications of all predecessors of a particular incoming request are ended and the first phase replication of the particular incoming request is concluded as well, the response message of the particular incoming request and the response messages of all predecessors are sent;
performing a second replication phase purely on the second processing unit serving as a backup, wherein in the second replication phase the changes stored in the modification records of the work area are applied to a replica of the state information and wherein the replica of the state information is formed by a table comprising three columns, wherein:
- the first column stores a unique key for each record of the state information,
- the second column keeps an indicator representing to which incoming request the most recently applied change is related; and
- the third column contains the actual state information;
and wherein the second replication phase comprises the consecutive steps of:
- picking a modification record from the work area and checking the indicators to identify, whether or not all modification records related to preceding changes to the original state information have successfully been stored in the work area and choosing a different modification record if no, and if yes for each element listed in the picked modification record, checking the current indicator stored in the second column of the replica of the state information; and
- if the indicator shows that the last modification of the particular record of the replica was because of a change previously applied to the original state information, then the record is replaced with the element taken from the modification record, wherein the entire record is overwritten and not only the modified portion, and wherein applying changes includes storing said indicator assigned to the processed request message in the respective field of the changed records; and
- if the indicator refers to a more recent change to the original state information then the original state information remaines unchanged.

2. A computer program product stored on a computer usable medium, comprising computer readable program means for causing a computer to perform a method according to claim 1.

## Patentansprüche

1. Verfahren zum Replizieren von Zustandsinformationen, die in einer ersten Datenverarbeitungseinheit (402) gespeichert sind, auf eine zweite Datenverarbeitungseinheit (404),
- wobei die Zustandsinformation beschreibt, wie etwas ist und die Zustandsinformation sich z.B. auf eine Datenbank, ein Prozesssteuersystem, Systemautomatisierung oder -überwachung bezieht;
- wobei die erste Verarbeitungseinheit die Replikation initiiert und die zweite eine Sicherungskopie der Original-Zustandsinformation behält, und wobei die Datenverarbeitungseinheiten aus einem Rechnersystem oder einem auf einem Rechnersystem laufenden Ausführungsprogramm bestehen, wodurch die Zustandsinformation in einem Datensatz gehalten ist, wobei das Verfahren für jede eingehende Anforderungsnachricht, die eine Änderung dieser Zustandsinformation anfordert, die folgenden Schritte umfasst:
- Empfangen einer eingehenden Anforderungsnachricht zum Ändern der Zustandsinformation an einer Eingangsschnittstelle eines ersten Verarbeitungssystems, wobei nur eine eingehende Anforderung zur gleichen Zeit bearbeitet werden kann;
- Zuordnen einer Kennung zu der eingehenden Anforderungsnachricht, welche die Reihenfolge angibt, in die eingehenden Anforderungsnachrichten verarbeitet werden;
- Verarbeiten der eingehenden Anforderungsnachricht und Aktualisieren des Datensatzes entsprechend dem Ergebnis der Verarbeitung der eingehenden Anforderungsnachricht, wobei der Satz von Datensätzen in einer Tabelle mit drei Spalten gespeichert ist und wobei:
- die erste Spalte dafür vorgesehen ist, einen eindeutigen Schlüssel für jeden Datensatz der Zustandsinformation zu speichern;
- die zweite Spalte eine Kennung hält, die angibt, zu welcher eingehenden Anforderung die zuletzt angewandte Änderung zugehörig ist; und
- die dritte Spalte die tatsächliche Zustandsinformation enthält;
- Starten einer ersten Phase des Replikationsprozesses gleichzeitig mit der Verarbeitung der zweiten eingehenden Anforderung, wobei die erste Phase des Replikationsprozesses die folgenden nacheinander ablaufenden Schritte umfasst:
- Senden eines Modifizierungsdatensatzes, der die der eingehenden Anforderungsnachricht zugeordnete Kennung und alle während der Verarbeitung der eingehenden Anforderungsnachricht an dem Datensatz vorgenommenen Änderungen enthält, an einen Arbeitsbereich, wobei der Arbeitsbereich ein eigenes Speicher-Subsystem der zweiten Datenverarbeitungseinheit ist, wobei der Arbeitsbereich mindestens so viele Speicherbereiche zum Aufnehmen eines bestimmten Modifizierungsdatensatzes umfasst, wie die Anzahl der Modifizierungsdatensätze, die gleichzeitig übertragen werden können, und der Arbeitsbereich so ausgebildet ist, dass er in der Lage ist, alle gleichzeitig übertragenen Modifizierungsdatensätze gleichzeitig zu empfangen;
- Speichern der Kennung, die anzeigt, zu welcher eingehenden Anforderung die übertragenen Modifizierungen zugehörig sind, neben den tatsächlichen Änderungen in dem Arbeitsbereich;
- Prüfen von Bestätigungsnachrichten, die von der zweiten Datenverarbeitungseinheit (404) empfangen worden sind und einen Empfang der gesendeten Modifizierungsdatensätze anzeigen;
- Senden einer Antwortnachricht an den Sender der eingehenden Anforderung, nachdem die Änderungen an der Original-Zustandsinformation erfolgreich an den Arbeitsbereich übertragen und dort gespeichert worden sind, wobei vor dem Absenden der Antwortnachricht an den Sender der entsprechenden eingehenden Anforderung geprüft wird, ob oder ob nicht die Modifikationen aller vorher angeforderten Änderungen erfolgreich an den Arbeitsbereich übertragen worden sind und die entsprechenden Bestätigungen empfangen worden sind, sodass nur dann, wenn die ersten Replikationsphasen aller Vorgänger einer bestimmten eingehenden Anforderung beendet sind und die erste Replikationsphase der bestimmten eingehenden Anforderung ebenfalls abgeschlossen ist, die Antwortnachricht der bestimmten eingehenden Anforderung und die Antwortnachrichten aller Vorgänger gesendet werden;
- Durchführen einer zweiten Replikationsphase nur auf der zweiten Verarbeitungseinheit, die als eine Sicherung dient, wobei in der zweiten Replikationsphase die in den Modifizierungsdatensätzen des Arbeitsbereichs gespeicherten Änderungen auf eine Replik der Zustandsinformation angewendet werden, und wobei die Replik der Zustandsinformation durch eine Tabelle gebildet ist, die drei Spalten umfasst, wobei:
- die erste Spalte dafür vorgesehen ist, einen eindeutigen Schlüssel für jeden Datensatz der Zustandsinformation zu speichern;
- die zweite Spalte eine Kennung hält, die angibt, zu welcher eingehenden Anforderung die zuletzt angewandte Änderung zugehörig ist; und
- und die dritte Spalte die tatsächliche Zustandsinformation enthält;
und wobei die zweite Replikationsphase die folgenden nacheinander ablaufenden Schritte umfasst:
- Auswählen eines Modifizierungsdatensatzes aus dem Arbeitsbereich und Prüfen der Kennungen um festzustellen, ob oder ob nicht alle Modifizierungsdatensätze, die zu vorhergehenden Änderungen an der Original-Zustandsinformation zugehörig sind, erfolgreich in dem Arbeitsbereich gespeichert worden sind, und Wählen eines anderen Modifizierungsdatensatzes wenn dies nicht der Fall ist, und wenn dies der Fall ist, Prüfen der in der zweiten Spalte der Replik der Zustandsinformation gespeicherten aktuellen Kennung, für jedes in dem ausgewählten Modifizierungsdatensatz gelistete Element; und
- wenn die Kennung zeigt, dass die letzte Modifizierung des bestimmten Datensatzes der Replik aufgrund einer vorher an der Original-Zustandsinformation angebrachten Änderung erfolgt ist, wird der Datensatz durch das dem Modifizierungsdatensatz entnommene Element ersetzt, wobei der gesamte Datensatz und nicht nur der modifizierte Teil überschrieben wird, und wobei das Anbringen von Änderungen das Speichern der der verarbeiteten Anforderungsnachricht zugeordneten Kennung in dem entsprechenden Bereich der geänderten Datensätze enthält; und
- wenn die Kennung sich auf eine neuere Änderung an der Original-Zustandsinformation bezieht, bleibt die Original-Zustandsinformation unverändert.

2. Computerprogrammprodukt, das auf einem von einem Computer verwendbaren Medium gespeichert ist, umfassend computerlesbare Programmmittel zum Veranlassen eines Computers ein Verfahren nach Anspruch 1 durchzuführen.

## Revendications

1. Procédé de réplication d'informations d'état stockées dans un premier module de traitement de données (402) vers un second module de traitement de données (404),
- dans lequel les informations d'état décrivent la manière dont quelque chose va et les informations d'état concernent par exemple une base de données, un système de commande de processus, une automatisation ou surveillance de système ;
- dans lequel le premier module de traitement initie la réplication et le second conserve une copie de sauvegarde des informations d'état d'origine, et dans lequel les modules de traitement de données sont formés par un système informatique ou un programme d'exécution s'exécutant sur un système informatique, moyennant quoi lesdites informations d'état sont conservées dans un ensemble d'enregistrements, ledit procédé comprenant les étapes suivantes, pour chaque message de demande entrante demandant un changement desdites informations d'état :
- recevoir un message de demande entrante pour changer lesdites informations d'état au niveau d'un port d'entrée d'un premier système de traitement, dans lequel seule une demande entrante peut être desservie à la fois ;
- attribuer un indicateur audit message de demande entrante représentant l'ordre dans lequel les messages de demande entrante sont traités ;
- traiter ledit message de demande entrante et mettre à jour ledit ensemble d'enregistrements conformément au résultat du traitement dudit message de demande entrante, dans lequel l'ensemble d'enregistrements est stocké dans une table incluant trois colonnes, et dans lequel :
- la première colonne est prévue pour stocker une clé unique pour chaque enregistrement des informations d' état ;
- la deuxième colonne conserve un indicateur représentant quelle demande entrante le changement appliqué le plus récemment concerne ; et
- la troisième colonne contient les informations d'état réelles ;
- de manière concomitante au traitement de la seconde demande entrante, lancer un processus de réplication de première phase, le processus de réplication de première phase comprenant les étapes consécutives consistant à :
- envoyer un enregistrement de modification contenant ledit indicateur attribué audit message de demande entrante et tous les changements appliqués audit ensemble d'enregistrements réalisés au cours du traitement dudit message de demande entrante à une zone de travail, la zone de travail étant un sous-système de stockage dédié du second module de traitement de données, dans lequel la zone de travail comprend au moins autant d'espaces de stockage pour prendre un enregistrement de modification particulier que le nombre d'enregistrements de modification qui peuvent être transmis de manière concomitante, et la zone de travail est adaptée à être capable de recevoir tous les enregistrements de modification transmis de manière concomitante en même temps ;
- stocker dans la zone de travail l'indicateur montrant quelle demande entrante les modifications transmises concernent à côté des changements réels ;
- vérifier les messages d'accusé qui ont été reçus dudit second module de traitement de données (404) indiquant une réception desdits enregistrements de modification envoyés ;
- envoyer un message de réponse à l'envoyeur de la demande entrante après que les changements des informations d'état d'origine ont été transmis avec succès à et stockés dans la zone de travail,
dans lequel, avant que le message de réponse ne soit expédié à l'envoyeur de la demande entrante respective, il est vérifié si les modifications de tous les changements demandés précédemment ont été transmis avec succès à la zone de travail et les accusés respectifs ont été reçus ou non, de sorte que seulement si les réplications de première phase de tous les prédécesseurs d'une demande entrante particulière sont terminées et la réplication de première phase de la demande entrante particulière est conclue également, le message de réponse de la demande entrante particulière et les messages de réponse de tous les prédécesseurs sont envoyés ;
réaliser une seconde phase de réplication uniquement sur le second module de traitement servant de sauvegarde, dans lequel les changements stockés dans les enregistrements de modification de la zone de travail sont appliqués à une réplique des informations d'état dans la seconde phase de réplication et dans lequel la réplique des informations d'état est formée par un tableau comprenant trois colonnes, dans lequel :
- la première colonne stocke une clé unique pour chaque enregistrement des informations d'état,
- la deuxième colonne conserve un indicateur représentant quelle demande entrante le changement appliqué le plus récemment concerne ; et
- la troisième colonne contient les informations d'état réelles ;
et dans lequel la seconde phase de réplication comprend les étapes consécutives consistant à :
- sélectionner un enregistrement de modification dans la zone de travail et vérifier les indicateurs pour identifier si tous les enregistrements de modification concernant des changements précédents des informations d'état d'origine ont été stockés avec succès dans la zone de travail ou non, et choisir un enregistrement de modification différent si ce n'est pas le cas, et si c'est le cas, pour chaque élément énuméré dans l'enregistrement de modification sélectionné, vérifier l'indicateur actuel stocké dans la deuxième colonne de la réplique des informations d'état ; et
- si l'indicateur montre que la dernière modification de l'enregistrement particulier de la réplique était en raison d'un changement précédemment appliqué aux informations d'état d'origine, alors l'enregistrement est remplacé par l'élément prélevé dans l'enregistrement de modification, dans lequel l'enregistrement entier est écrasé et pas seulement la portion modifiée, et dans lequel appliquer des changements inclut stocker ledit indicateur attribué au message de demande traité dans le champ respectif des enregistrements changés ; et
- si l'indicateur désigne un changement plus récent des informations d'état d'origine, alors les informations d'état d'origine restent inchangées.

2. Produit de programme informatique stocké sur un support utilisable par ordinateur, comprenant un moyen de programme lisible par ordinateur pour amener un ordinateur à réaliser un procédé selon la revendication 1.
